Europäisches Patentamt

European Patent Office

Office européen des brevets

(11) Publication number: **0 340 009**
**A1**

# EUROPEAN PATENT APPLICATION

(21) Application number: 89304225.9

(22) Date of filing: 27.04.89

(51) Int. Cl.4: **B 65 G 13/00**
**B 65 G 39/06**

(30) Priority: 27.04.88 US 187037

(43) Date of publication of application:
02.11.89 Bulletin 89/44

(84) Designated Contracting States: DE FR GB

(71) Applicant: **KORNYLAK CORPORATION**
**400 Heaton Street**
**Hamilton, OH 45011 (US)**

(72) Inventor: **Kornylak, Andrew T.**
**325 North C Street**
**Hamilton Ohio 45013 (US)**

(74) Representative: **Purvis, William Michael Cameron et al**
**D. Young & Co. 10 Staple Inn**
**London WC1V 7RD (GB)**

(54) Gravity roller conveyor.

(57) An undriven gravity roller conveyor has idler conveyor rollers (40) having a rigid outer annular wheel surface (60) and an annular tyre (74) of an elastomeric material with an inner annular bearing surface (66) of complementary shape, mounted on each rigid outer annular wheel surface (60), the rollers (40) being arranged in successive rows to convey loads of cargo. The elastomeric tyres (74), as mounted on the wheel surfaces, (60) have substantially equal radial thicknesses providing outer annular bearing surfaces (26) with a first radial dimension and a first circumferential surface area, and are made of a material having an elastic limit by which each of the tyres (74) acquires a permanent deformation known as compression set when radially depressed. Support structure (64) has rigid outer annular bearing surfaces (70) concentric with and rotatable about corresponding axes (46) of rotation with the elastomeric tyres (74), the bearing surfaces (70) having a second and lesser radial dimension and a second circumferential surface area not less than one-half of the first circumferential surface area.

FIG. 3

**Description**

# GRAVITY ROLLER CONVEYOR

The invention relates to gravity roller conveyors and particularly to such conveyors using rollers with deformable tyres.

Previously proposed gravity roller conveyors typically use a pair of structural members to support each row of load-bearing rollers. Such a structure necessitates tedious fabrication techniques to ensure uniform spacing between all of the structural members throughout the length of the conveyor. It is often desirable in such systems to stagger the placement of successive rollers to reduce the gap over which a load is unsupported. Typically, staggering is achieved merely by adding one or more additional rows of rollers with their centres longitudinally offset from one another. Recent conveyor designs have incorporated rollers mounted on alternate sides between pairs of support structures; however, the need to accommodate the axles of successive rollers has restricted the ability of such designs to minimize the gap between successive rollers. To date, the only conveyor systems providing minimal gaps between successive rollers require an excessive number of structural supporting members. Such designs exacerbate the fabrication difficulties of maintaining a proper spacing between the structural supporting members.

To avoid the use of ballbearing type journals between the axles of conveyor rollers and the structural supporting members, some designs have used specially machined configurations of axles retentively to engage apertures in the support members with various types of flanges, bushings and retainers. Other designs have used sleeve-type ballbearing assemblies interposed between the axles of the rollers and specially formed receptacles in the supporting structural members. Unique axles and specially formed receptacles both incur additional tooling and fabrication costs. Moreover, the often intricate interrelation between the specially formed receptacles and the unique axles or bearings tends to hinder the repair or replacement of damaged rollers, thereby unnecessarily contributing to the maintenance cost of such conveyor systems.

Often rollers used for conveyors are provided with deformable tyres of various configurations and materials. A major difficulty with currently available conveyors using deformable tyre conveyors (both gravity conveyors using hysteresis speed control tyres and push-line conveyors using minimum hysteresis tyres) however, arises from a tendency of the tyres, particularly tyres made of elastomeric materials, to develop a compression set when a cargo load is allowed to rest at one plate. Compression set causes a flat spot on the periphery of a tyre, thereby causing subsequent resistance to rolling conveyance of a cargo load.

The choice of materials available in efforts to overcome the problem of compression set and rolling resistance is limited to materials exhibiting a low compression set, preferably less than fifteen percent (15%), when tested in accordance with ASTM method B for twenty-two hours at a temperature of 70°C. Unfortunately, this limitation on materials eliminates many deformable materials and elastomers exhibiting properties of desired hardness at required temperatures which would otherwise make those elastomers ideal. For example, urethane compounds having low compression sets have not been found to be suitable at temperatures in ranges between -1°C (30°F) and -29°C (-20°F), a temperature range invariably encountered by conveyors installed in freezers, because such materials tend to become too hard within such a temperature range. Conversely, elastomers which remain soft enough (e.g. softer than 90 Shore A) tend to develop excessive compression set.

Another problem encountered by currently available conveyors using deformable tyres arise from the tendency of wood slats of pallets to compress when a cargo load is allowed to remain stationary, particularly where elastomeric tyres extend above a narrow, rigid rim of a roller wheel. Often, enough indentation of the rim into the wood of a pallet's slat occurs to prevent free movement of the pallet. Moreover, high humidity seems to exacerbate this problem. Furthermore, softer woods are more susceptible to indentation and subsequent rolling resistance after having remained stationary while supported by currently available conveyors using rollers fitted with elastomeric tyres.

According to one aspect of the invention there is provided an undriven gravity roller conveyor, comprising:

a stationary rigid conveyor support;

a plurality of idler conveyor rollers serially arranged in successive rows along a conveying direction extending longitudinally of the conveyor support;

bearing means freely rotatably to mount each of the conveyor rollers on the conveyor support with parallel axes of rotation, the axes being perpendicular to the conveying direction to support loads on the conveyor rollers and convey loads in the conveying direction;

a first plurality of the rollers within the length of the conveyor support each having a rigid outer annular wheel surface, and an annular tyre of an elastomeric material mounted on each rigid annular wheel surface and concentrically disposed about a corresponding one of the axes of the first plurality of rollers in each row;

each of the tyres having an inner annular bearing surface of complementary shape to the rigid outer annular wheel surface;

the tyres having substantially equal radial thicknesses providing a first outer annular bearing surface having a first radial dimension and a first circumferential surface area;

the elastomeric material of the tyres having a deformation limit at which each of the tyres acquires excessive permanent set when radially depressed; and

the rollers in each row providing support means having a rigid second outer annular bearing surface concentric with and rotatable about corresponding axes of rotation, the second outer annular bearing surface having a second and lesser radial dimension than the first radial dimension and a second circumferential surface area not less than one-half of the first circumferential surface area, to receive and directly engage concurrently with one or more of the tyres disposed about the corresponding ones of the axes a load being simultaneously supported and conveyed by one or more of the tyres before the deformation limit of the elastomeric material is reached.

According to another aspect of the invention there is provided an undriven gravity roller conveyor, comprising:

a stationary rigid conveyor support;

a plurality of idler conveyor rollers each having a pair of opposite axially spaced annular flanges integrally forming part of and extending radially outwardly from opposite sides of a plurality of outer annular wheel surfaces, the rollers being serially arranged in successive rows along a conveying direction extending longitudinally of the conveyor support;

the rollers each having a rigid outer annular wheel surface, and an annular tyre of an elastomeric material mounted on and concentrically disposed about the rigid annular wheel surface;

each of the tyres having an inner annular bearing surface of complementary shape to the rigid outer annular wheel surface;

the tyres having substantially equal radial thicknesses providing a first outer annular bearing surface having a first radial dimension and a first circumferential surface area;

the elastomeric material of the tyres having a deformation limit at which the tyres acquire excessive permanent set when radially depressed; and the axially spaced flanges providing a rigid second outer annular bearing surface concentric with the rigid annular wheel surface, the second outer annular bearing surface having a second and lesser radial dimension than the first radial dimension and a second circumferential surface area not less than one-half of the first circumferential surface area, to receive and directly engage concurrently with one or more of the tyres disposed about corresponding axes a load being simultaneously supported and conveyed by one or more the tyres before the deformation limit of the elastomeric material is reached.

Such a conveyor need have only a small number of components, can cost less to fabricate, can easily be fabricated to precise tolerances and can be amenable to rapid replacement of its load-bearing rollers.

The load-bearing rollers may be easily interchanged and the spacing patterns between load-bearing rollers may be easily modified.

The conveyor can exhibit a very close spacing between load-bearing rollers and can accommodate the movement of cargo borne in containers which have supporting surfaces and slats of narrow width engaging the load-bearing rollers of the conveyor.

The conveyor can utilise inexpensive load-bearing rollers exhibiting low friction characteristics such as improved elastomeric rollers and can exhibit a broad load-bearing surface area to support stationary and moving cargo.

The conveyor can minimize resistance of cargo to resumption of movement after a period of having remained stationary while supported by rollers fitted with elastomeric tyres.

A plurality of discrete, elongate channel members can be laterally spaced apart, in parallel on a base structure to form a plurality of columns. The separation between the side walls of neighbouring channel members can be equal to the separation between the opposite side walls of each of the channel members. Advantageously uniform open slots are formed along the distal edges of the parallel side walls of each channel member with equidistant spacing between successive slots along each edge. Corresponding slots in adjacent side walls can be aligned to form parallel rows that are substantially perpendicular to the length of the columns. Rollers mounted on axles can be positioned between the side walls with the axles being disposed within the slots.

Alternatively, such features as the depths, widths, or spacings between successive slots may be varied, either separately or in combination, along the length of the channel members to accept different sizes or arrangements of rollers at specific locations and thereby accommodate variations in cargo loading experienced at those locations.

The invention is diagrammatically illustrated by way of example in the accompanying drawings, in which:-

Figure 1 is a part sectional elevation illustrating a disadvantage of previously proposed conveyor rollers;

Figure 2 is a perspective view of one embodiment of a roller of an undriven gravity roller conveyor according to the invention;

Figure 3 is a front view illustrating a section of an undriven gravity roller conveyor according to an embodiment of the invention;

Figure 4 is a front cross-sectional view of an alternative embodiment of a roller of an undriven gravity roller conveyor according to the invention;

Figure 5 is a front partial cross-sectional view of a further alternative embodiment of an undriven gravity roller conveyor according to the invention;

Figure 5A is a cross-sectional view of a tyre subassembly taken in a plane Va-VA' in Figure 5.

Figure 6 is a front partially cross-sectional view of an alternative embodiment of an undriven gravity roller conveyor according to the invention;

Figure 7 is a perspective view of an alternative embodiment of an undriven gravity roller conveyor according to the invention;

Figure 8 is a top view of a conveyor of the kind shown in Figure 7;

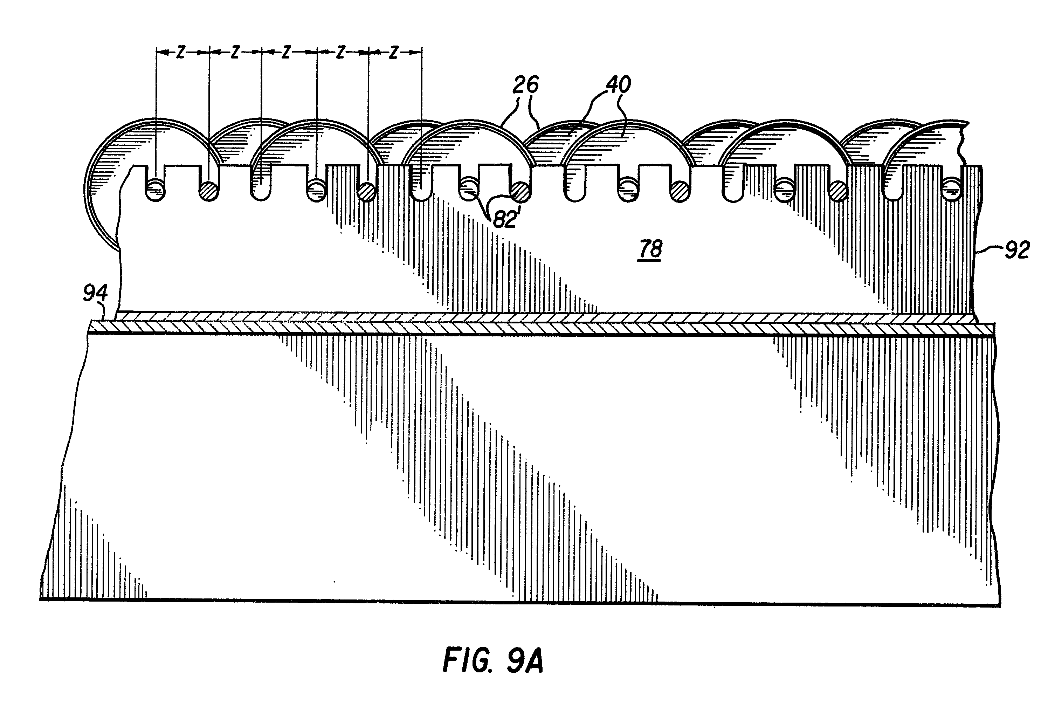

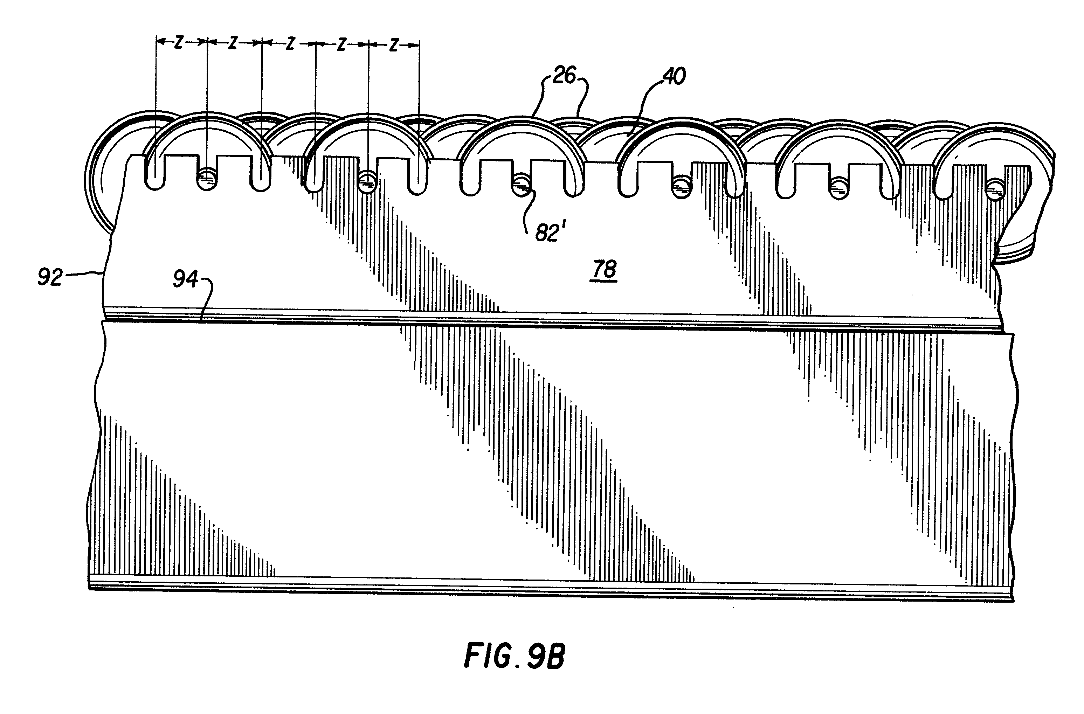

Figures 9A and 9B are side cross-sectional views taken on lines XIA-XIA' and SIB-SIB' in Figure 8; and

Figure 10 is an end cross-sectional view of an embodiment of an undriven gravity roller conveyor according to the invention.

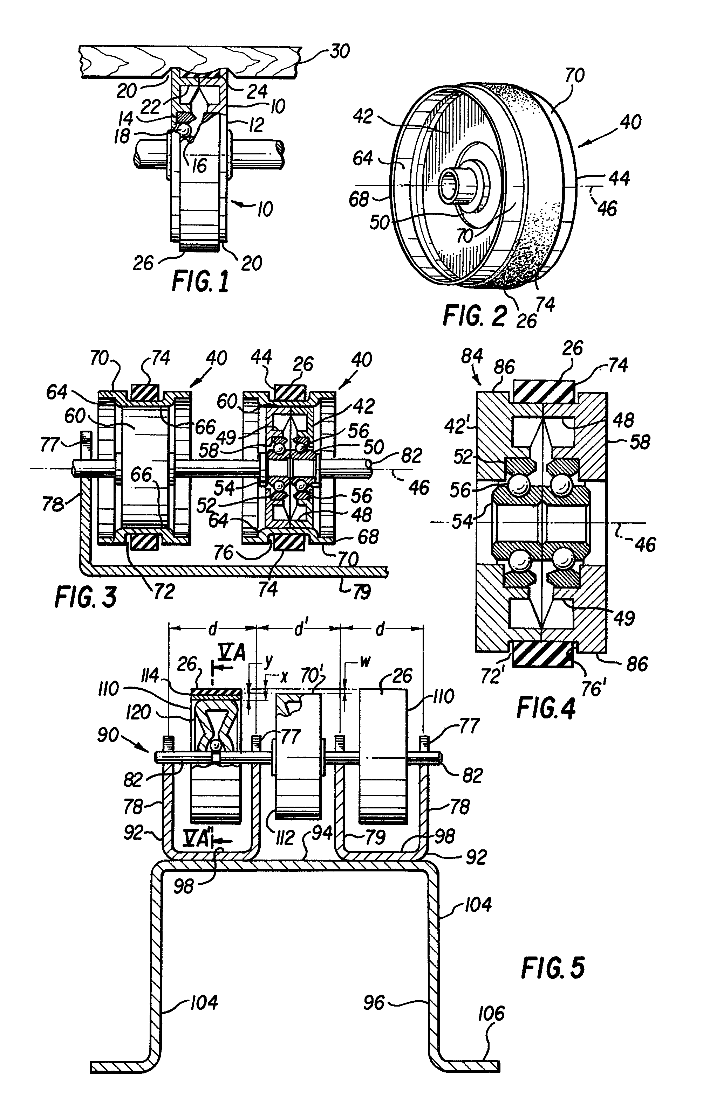

Referring to the drawings, Figure 1 illustrates one deficiency of previously proposed conveyors, each roller of which includes a circular roller 10 made of a non-deformable material such as steel with a cylindrical hub portion 12 into which is formed a conventional ballbearing assembly including an outer race 14, an inner race 16, and ballbearings 18. At its radial outer end, the roller 10 forms circular rims 20. A cylindrical flange 22 concentric with and about the hub 12 is formed as an annular surface at a location spaced inwardly from the outer periphery of the rims 20. A solid or cellular (foam) material, tyre 24 of a deformable material such as an elastomeric is mounted on the outer periphery of the roller 10 formed by the cylindrical flange 22. The tyre 24 is an integrally formed member having an inner diameter substantially equal to that of the outer diameter of the cylindrical flange 22. The tyre 24 may fit the periphery of the cylinder formed by the flange 22 snugly or even loosely if so desired. The radial thickness dimension of the tyre 24 is such that its outer circumferential bearing surface extends radially outwardly beyond the rims 20 when the tyre 24 is in a relaxed state, that is, while the tyre 24 is not supporting any cargo or other loading on an outer circumferential bearing surface 26 of the tyre which would tend to compress the tyre 24.

The material of the tyre may be, as is explained in Patent specification US-A-4,006,810, similar to that described in Patent specification US-A-3,443,674, although the properties of hysteresis, hardness, temperature stability, solvent, and chemical resistance may be varied in accordance with the load and environment in which the tyre is to be used. It is desirable that the material from which a solid tyre 24 is made be of such nature that the tyre 24 does not retain a deformity, such as a "compression set" before a load such as a slat 30 of a cargo pallet reaches the rims 20 of the roller 10.

As shown in Figure 1, a problem frequently arises in conveyors using deformable tyres of previously proposed kind when a load has been allowed to remain stationary while resting upon the outer circumferential bearing surface 26. The problem occurs if the slats 30 are narrow pallet slats and they rest upon either one or only a few of the rollers 10, thereby compressing the tyres 24 until the slats 30 rest upon the rims 20. The load bearing surface area of the roller 10 is limited by the narrow axial width of the rims 20 in comparison to the axial width of the now compressed tyre 24; consequently, supplementing the load bearing surface area provided by the compressed tyre 24 with the load bearing surface area of the narrow rims 20 only marginally enhances the net load bearing area (or, "footprint") of the roller 10 available to support the stationary cargo load. This allows the surface area of the rims 20 to indent the slat 30. Particularly pronounced indentation occurs with wooden slats, especially slats made of softer woods. The degree of indentation seems to be exacerbated by the presence of high humidity. Indentation consequently resists free movement of a pallet along the conveyor, thereby frequently necessitating the application of force to cause a pallet to resume forward movement along a conveyor after having remained stationary for a short period of time.

Currently available conveyors using rollers with rigid, non-deformable outer circumferential bearing surfaces, such as "skate wheels", similarly cause enough indentation on the skate wheel into a wood slat to prevent free movement of a pallet.

Turning now to Figure 2, a roller 40 containing a central wheel subassembly 42 and an outer annular compound tyre subassembly 44 concentrically and coaxially disposed around the wheel subassembly 42. The wheel subassembly 42 is constructed of two separate like parts which are arranged as mirror images of one another and attached together in any desired manner, such as by welding. Each of the two parts of the subassembly 42 includes a circular wheel half which would be obtained if a wheel were cut diametrically to an axis 46 midway between flanges 48, as may be more clearly shown in Figure 3.

Each half of the subassembly 42 may include a cylindrical hub 50 as shown in cross-sectional detail in Figure 3. Fitted within the cylindrical hub 50 of each half is a conventional ballbearing assembly, which may include an outer race 52, an inner race 54, and ballbearings 56. When the ballbearing assembly is mounted within the hub 50 with the outer periphery of the outer race 52 in firm contact with the inner periphery of the hub 50 and with one side abutting the inner surface of a wall 58 of the subassembly 42, the end of the inner race 54 further from the wall 58 terminates in the plane of the free end of the flange 48. The opening provided by the circular wall 58 accommodates a portion of the inner race 54 when the assembly is mounted within the hub 50. The halves of the central wheel subassembly 42 may be fabricated of metal or plastics, and assembled together by axially aligning the two halves with the free ends of the flanges 48 in abutting relationship. The free ends of the flanges 48 may then be joined together, for example by ultrasonic welding.

After securing the two halves together, the subassembly 42 forms a cylinder using the abutting cylindrical flanges 48 to provide an outer circumferential surface 60.

The compound tyre assembly 44 is constructed from a cylindrical rigid flanged tyre 64 made of a generally non-deformable material such as metal or a plastics exhibiting a minimal degree of elasticity. The flanged tyre 64 may comprise an inner annular member having an inner peripheral surface 66 conforming to the exterior dimensions of the outer circumferential surface 60, albeit with a slight greater axial width. The opposite axial ends of the annular member are radially recessed from the inner circumferences of the member to form a pair of oppositely disposed flanges 68 providing outer circumferential rigid bearing surfaces 70.

A central circumferential region along the outer surface of the rigid tyre 64 of the compound tyre subassembly 44 may be machined to provide a central circumferential recess 72 to accommodate a deformable tyre 74 concentrically disposed about the rigid tyre 64, within the recess 72. The deformable tyre 74 may be solid and made of a resilient and deformable material such as an elastomeric. The deformable tyre 74 is mounted on the outer periphery of the circumferential recess 72, axially disposed between opposed side walls 76 of the recess 72.

The material of the deformable tyre 74 may, for example, be made of an elastomer which remains softer than 90 Shore A. The axial width of the tyre 74 may be made somewhat less than the distance between the side walls 76, thereby enabling the recess 72 fully to accommodate the volume of the deformable tyre 74 during compression by a cargo load.

The compound tyre subassembly 44 may be mounted on the wheel subassembly 42 by a force fit. To ensure a force fit, however, the inner diameter along the inner peripheral surface 66 of the flanged tyre 64 should be less than the diameter of the outer circumferential surface 60 of the central bearing subassembly 42. With a force fit construction between the central bearing subassembly 42 and the compound tyre 44, the fact that the circumferential surface 60 has a greater diameter than the circumferential surface 66 when the subassemblies 42 and 44 are at the same environmental conditions and temperature, ensures that the only means holding the compound tyre subassembly 44 on the bearing subassembly 42 is frictional engagement between the outer surface 60 and the inner circumferential surface 66, as caused by the inherent resiliency of the subassemblies which produces radial forces perpendicular to their engaging surfaces. Consequently, the compound tyre subassembly 44 will be in tension while the bearing subassembly 42 will be in compression due to the resulting interference fit after assembly.

When the subassemblies 42, 44 have been joined together, as by an interference fit, the roller wheel 40 may be mounted upon a shaft 82 coaxially disposed along the central axis 46 of the wheel 40, as is shown in Figure 3, either singly or in conjunction with one or more other roller wheels. The ends of the shaft 82 may then be placed within open slots 77 extending from the upper, or distal, ends of opposite side walls 78 of a supporting component such as a single track rail 79, thereby forming one row of a succession of rows defining a column of roller wheels extending longitudinally of the supporting rail 79.

Turning now to Figure 4, a front cross-sectional view of an alternative embodiment of an undriven gravity roller wheel 84 constructed with a wheel subassembly 42' is shown. The wheel subassembly 42', as shown in Figure 4, differs from wheel subassembly 42 of Figure 3 primarily in the greater axial width of the annular walls 58 and in the extension of the walls 58 radially outwardly of the flanges 48 to provide at the outer radial ends of the walls 58 a pair of outer circumferential bearing surfaces 86.

The wheel subassembly 42' includes as well as the outer cylindrical flanges 48, inner hub flanges 49 which, when the halves of the wheel subassembly 42' are joined together, may contain the outer race 52, the inner race 54, and the ballbearings 56, as previously explained herein.

The outer circumferential surfaces of the flanges 48 are radially disposed inwardly from the outer circumferential bearing surfaces 86 to provide a central circumferential recess 72'. The deformable solid tyre 74 may be mounted within the recess 72', between opposite side walls 76' thereof, to rest symmetrically and coaxially about the wheel subassembly 42'.

In the roller assemblies shown in Figures 2, 3 and 4, the deformable tyres 24, 27 lie between a pair of circumferential bearing surfaces 70, 86 and have sufficient radial thickness to project radially outwards beyond the surfaces 70, 86. The axial distances between the side walls 76, 76' may be made greater than the axial width of the deformable tyre 24, 74 thereby enabling the recesses 72, 72' to accommodate the volume of the deformable tyre 24, 74 during compression. The outer diameter of the bearing surfaces 70, 86 are selected in.comparison with the outer diameter of the bearing surface 26 to ensure that during compression of the deformable tyre 24, 74, the surfaces 70 and 86 will receive and directly engage, concurrently with the bearing surface 26, a cargo load being simultaneously supported and conveyed on the tyre 74 before the elastic limit of the elastomeric mateial of the tyre 74 is reached. Consequently, as the tyre 74 is compressed into the recess 72 by a cargo load, both surfaces either 26, 70 or 26, 86 concurrently engage and directly support the cargo, thereby advantageously supplementing the footprint of the deformable tyre 74 with the areas of the bearing surfaces 70 or 86. This ensures that sufficient surface area of a conveyor roller 40, 84 is available to engage and support both moving and stationary cargo, thus minimizing or eliminating indentation of the bearing surfaces into such cargo's surfaces engaged as the undersides of wooden slats. These features are maximized if the axial widths of the outer circumferential bearing surfaces 70, 86 are constructed to provide not less than one-half of the surface area of the circumferential bearing surface 26 of the deformable tyre 74. With such construction, the tyres 74 may be made with elastomers which have a hardness not greater than 90 Shore A.

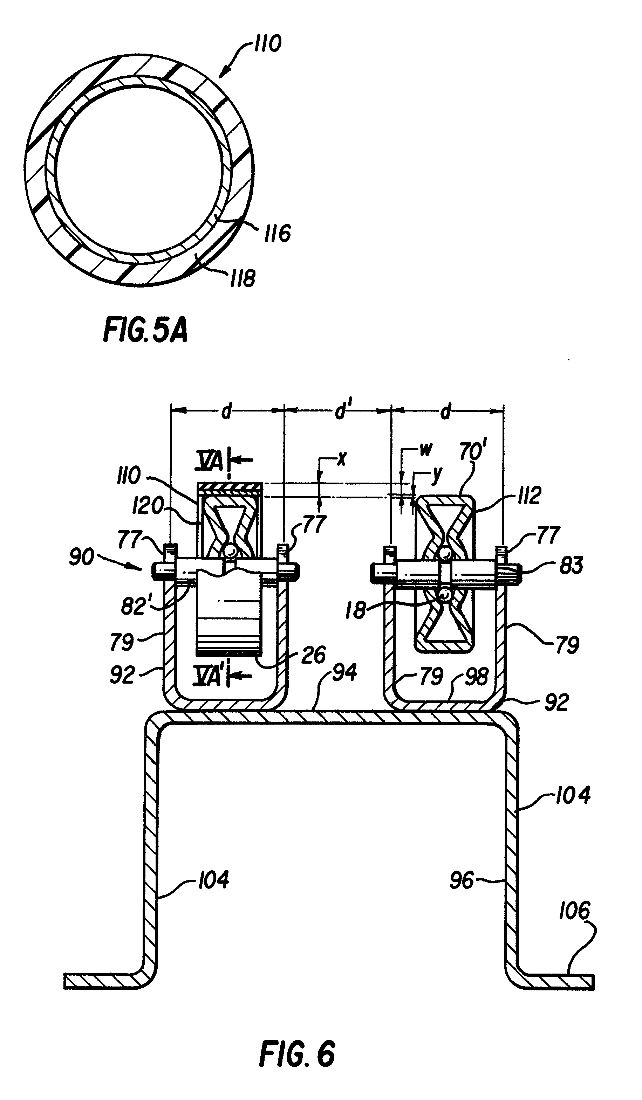

Figures 5, 6, 7 and 8 show a section of a multi-track undriven gravity conveyor rail 90 which is constructed with a pair of elongate channel members 92 of any desired length affixed in spaced apart, parallel relation to the outer surface of a web 94 of a base structure 96. Each channel member 92 has the pair of opposite side walls 78 extending in parallel longitudinally of the section 90. Connecting sides 98 rigidly join and maintain the opposite side walls 78 in parallel fixed, spaced apart relation.

The plurality of open slots 77 are formed along the unjoined upper edges of each of the side walls 78. The slots 77 are substantially identical and equidistantly spaced along the upper or unjoined edges of the side walls 78 and are aligned in parallel columns which are substantially perpendicular to the length of the multi-track rail 90.

The base structure 96 can itself be constructed as a channel or C-shape with a pari of substantially parallel flange walls 104 disposed along opposite sides of the web 94 and extending downwardly away from the connecting sides 98 of the channel members 92. The lowermost ends of the flange walls 104 are bent at right angles to the planes of the flange walls 104 to provide a pair of feet 106. The disposition of the flange walls 104 and the feet 106 extending in an opposite direction from the side walls 78 endows the multi-track rail section 90 with enhanced rigidity, thereby enabling a conveyor in which the rail section 90 is incorporated to handle heavy cargo loads without the need to form the channel members 92 of extraordinarily strong material.

Figure 5 provides a cross-sectional end view to show the detailed structural aspects of one embodiment of the multi-track rail section 90. The pair of channel members 92 shown provide four side walls 78 accommodating two parallel columns of rollers 110 having the deformable solid tyres 74 providing the outer circumferential bearing surfaces 26 around their circumferential periphery, aligned in rows with one intermediate column of rollers 112 having non-deformable outer circumferential bearing surfaces 70'. As shown, the connecting sides 98 rigidly join and maintain the opposite side walls 78 in their fixed, spaced-apart relation. The separation, $d'$ between adjacent side walls 78 of neighbouring channel members 92 is equal to the separation, $d$ between the opposite side walls 78 of each of the channel members 92. The rollers 112 providing the non-deformable circumferential bearing surfaces 70' may be conventional versions of standard ball bearing skate wheels with an axle 82' pressed through the centre of the wheel subassembly.

In Figures 5 and 6, the rollers 110 differ from the rollers 112 in that the former include tyre subassemblies 114 having a cylindrical rim 116 with an inner cylindrical surface and an outer cylindrical surface. As shown in Figure 5A which is a cross-sectional view taken on line VA-VA' in Figures 5 and 6, a cylindrical deformable tyre 118 made of a material such as an elastomer, has an inner cylindrical surface bonded to the outer cylindrical surface of the rim 116. The bonding may be by means of self-adhesion, vulcanizing, application of adhesives, or the application of solvents. In any event, the tyre 118 is permanently bonded to the outer surface of the rim 116 to prevent relative rotation between the tyre and the rim. The deformable tyre 118 may have its hardness, elasticity and hysteresis properties chosen according to its purpose and intended environment and to conform with the cargo loads which it will be expected to support. The rim 116 of the tyre subassembly 114 may be constructed of a material specifically suited for its purpose without compromise of the needs of the wheel subassembly. For example, the rim 116 may be constructed of steel, plated steel, aluminium, brass or even a synthetic resin or plastics material. A plurality of such tyre subassemblies may be stockpiled with many different types being stockpiled in accordance with the above characteristics that may be desired.

Referring to Figures 5 and 6, the rollers 110 are assembled with an "interference fit" between the wheel subassembly formed by currently available skate wheels and the tyre subassemblies 114. As used herein, "interference fit" means that the rim 116 of an unassembled tyre subassembly 114 has an internal diameter less than the external diameter of the non-deformable outer circumferential bearing surface 70' that it will engage when assembled, while all other conditions such as temperature, are equal, and that as assembled the only securement between the surface 70' and the inner circumferential surface of the rim 116 will be frictional forces of the peripherally engaging surfaces that are resiliently and radially pressed together by the inherent resiliency of the materials.

The assembly is by elastic deformation of the materials through such assembly processes as pre-stressing of either the inner or outer part, or both, by heat differential (for example, a shrink fit), mechanical flexing, elastic joining or snap fit or by a driven force fit. This frictional engagement alone will be sufficient to maintain the assembly unitary for the purposes of conveying without relative movement between the rim and the outer circumferential surface 70'.

As shown in Figures 5 and 6, the outer diameter of the surface 70' of the roller 112 is greater than the outer diameter of wheel subassembly 120 by a difference, $y$, while the outer diameter of the deformable tyre 26 (after the tyre subassembly 114 is mounted in an interference fit on a wheel subassembly 120) is greater than the outer diameter of the bearing surface 70' by a quantity $w$. As may be seen in Figures 5 and 6, the diameter of the bearing surface 70 of the rollers 112 is greater than the outer circumferential surface of the wheel subassemblies 120 (after assembly) by a value $x$, where:

$$x - y = w \quad (1).$$

The difference $w$, is selected to ensure that the outer annular bearing surface 70' has a lesser radial dimension than the outer circumferential bearing surface 26 of the roller 110, whereby the bearing surface 70' will receive and directly engagingly support, concurrently with the bearing surface 26, a cargo load being simultaneously supported and conveyed by the rollers 110 before the predetermined limit of deflection compression set of the material of the deformable tyres 118 is reached. During design, the maximum deflection desired to be tolerated (e.g. 30% of the relaxed thickness of a tyre) is established as the limit of deflection compression. In design, compression set is preferably limited to ten percent as determined by Method B of an ASTM test; occasionally however, it is necessary with some of the materials used in tyres to accept up to twenty percent compression set, as determined by the same test. The axial width of the rollers 112 is chosen to ensure that the circumferential load-bearing surface areas 80' are not less than one-half of the circumferential load-bearing surface areas 26 of the rollers 110.

In the embodiment shown in Figure 5, the roller 112 is mounted co-axially with the rollers 110 on the single shaft 82 extending through all four slots 77 in the channel members 78 to form a single row. In the embodiment of Figure 6, however, the rollers 110 and 112 are co-axially mounted and disposed within different channel members 92, albeit on discrete axles 82′. Modifications of the embodiments of Figures 5 and 6 may be formed with different combinations of the channel members 92 to provide various arrangements of the rollers 112 with tyres of deformable material and the rollers 112 providing the rigid, non-deformable load-bearing surface 70′ of a lesser diameter to receive a cargo load before the elastic limit of the material of the deformable tyres is reached.

In the embodiments of Figures 5 and 6, the outer diameter of the wheel subassemblies 120 is greater than the inner diameter of the rim 116 in the deformable tyre subassemblies 114 when the subassemblies are separate from each other and under the same environmental conditions, for example, at the same temperature. The wheel subassemblies may be kept in an inventory as common to all tyre subassemblies, that is all wheel subassemblies will be identical to each other and common to a plurality of different types of tyre subassemblies. Also, it is possible to provide a plurality of different wheel subassemblies, for example, that differ in load-bearing capacities and shaft configurations which, in turn, may be interchangeable with a plurality of different types of tyre subassemblies. The critical feature is that all of the tyre subassemblies have substantially the same inner diameter, that all of the wheel subassemblies have substantially the same outer diameter, and that the outer diameter of the wheel subassemblies be larger than the inner diameter of the tyre subassemblies, to provide for an interference fit between the subassemblies. As interference fit is the most economic and convenient method for mounting the tyre subassembly upon the wheel subassembly.

The assembly process may also be formed by cooling the wheel subassembly and, or, heating the tyre subassembly prior to mounting so that after assembly, the two subassemblies may reach the same temperature and provide for an interference fit. Also, a suitable press may be used for the assembly of a force fit. In any event, the only means holding the tyre subassembly onto the wheel subassembly is frictional engagement between the outer surface of the wheel subassembly 120 and the inner surface of the rim 116 as is caused by the inherent resiliency of the subassemblies which produces radial forces perpendicular to the engaging surfaces; that is, the tyre subassembly will be in tension and the wheel subassembly will be in compression as a result of an interference fit, when assembled.

In general, a limiting factor of the load-carrying capacity of currently available conveyors has been the capacity of deformable tyres because anti-friction bearings have tended to have load-carrying capacities many times greater than the tyres. With the presently disclosed invention, when it is desired to have a high load capacity roller, a tyre subassembly may be selected of a far greater axially measured width than the wheel subassembly to provide a roller in which the load-carrying capacity of the deformable tyre is greater, or even approximately equal to, the load-carrying capacity of the bearing. This is in contrast to the usual construction wherein the width of the tyre subassembly (not shown) is equal to or less than the width of the wheel subassembly.

In the embodiment of Figure 6, shoulders 83 formed in the axles 82′ inwardly from the end portions of the axles, bear against the facing surface of the side walls 78. Alternatively, the wheel subassemblies 120 and the rollers 112 may be replaced with types having a solid inner race with projecting journals disposable within the slots 77.

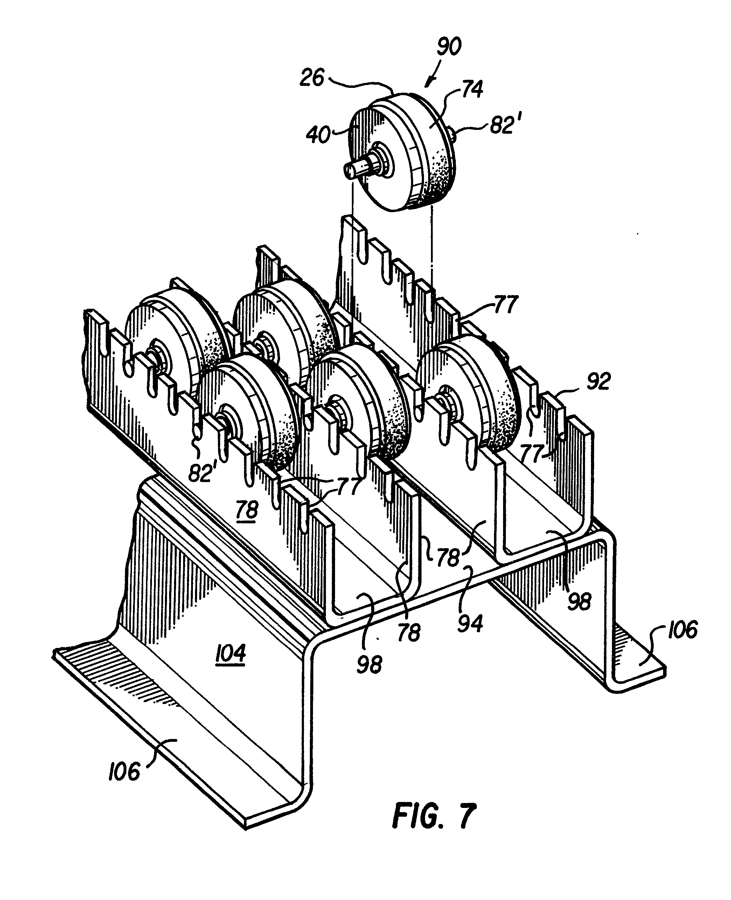

Referring now to Figure 7, a section of the multi-track undriven gravity conveyor rail 90 is shown as constructed with a pair of the elongate channel members 92 of any desired length affixed in a spaced-apart, parallel relation to the outer surface of the web 94 of the base structure 96. Each channel member 92 has the pair of opposite side walls 78 extending in parallel along the length of the rail section 90. The connecting sides 98 rigidly join and maintain the opposite side walls 78 in their fixed spaced apart relation.

A plurality of the rollers 40 having the opposite end portions of their axles 82′ extending from opposite sides, are disposed in columns between the opposite side walls 78 of each of the channel members 92 and between adjacent side walls 78 of each pair of neighbouring channel members 92. The end portions of the axles 82′ are disposed within aligned pairs of the slots 77, thereby forming three columns of staggered rollers 40 with each column extending over substantially the entire length of the multi-track rail section 90. In this manner, it can be seen that two discrete members 92, when spaced apart so that the least distance between their closest side walls 78 is equal to the spacing between opposite side walls 78 of each channel members 92, provide three adjacent columns of unconnected rollers for independently supporting a cargo load such as a slat of a pallet.

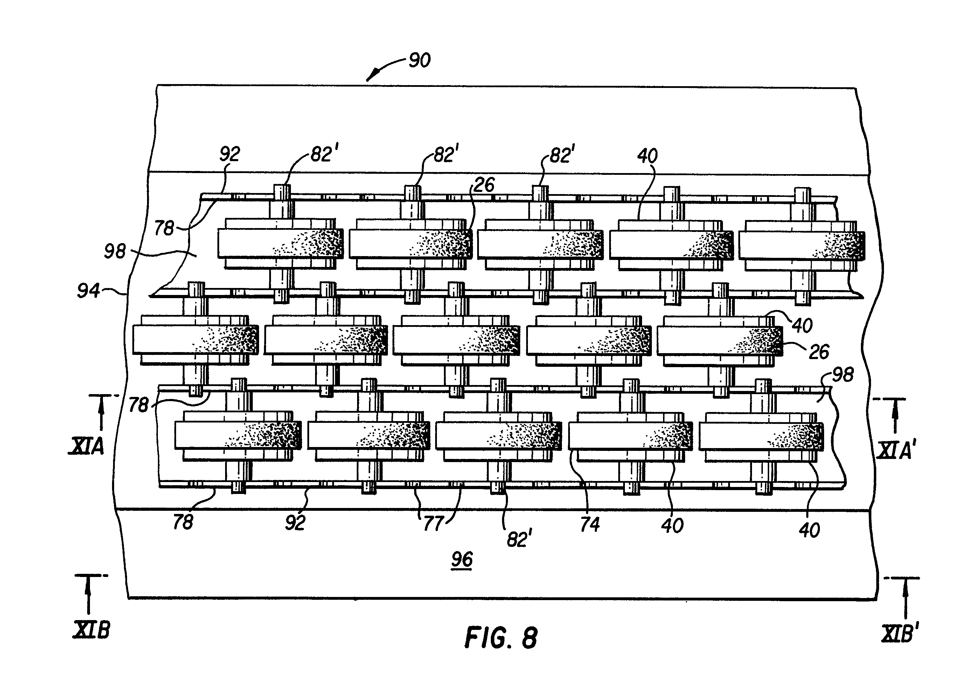

As shown in Figures 7 and 8, this arrangement of the channel members 92 having the plurality of substantially identical slots 77 aligned in rows perpendicular to the length of the rail section 90, provides a configuration in which the end portions of the axles 82′ are disposed within every third pair of slots along each column formed by the side walls 78. This arrangement allows the spacing between rollers in each column to be independently determined and tailored to a particular conveyor application. It may be seen therefore, that three discrete, spaced-apart channel members 92 will provide five columns of load-bearing rollers while four discrete, spaced-apart channel members 92 will provide seven columns of rollers. In general, $n$ discrete channel members 92 arranged in parallel with a separation between the side walls of neighbouring channel members being equal to the separation between the opposite side walls of each channel member, and with corresponding slots 77, in at least the closest of the opposite side walls of the neighbouring channel members 92, aligned in parallel rolls substantially perpendicular to the length of the columns, provide two $n - 1$ columns for the placement of load-bearing rollers 40.

The spacing between the slots 77 is best shown by Figures 8A and 8B, side cross-sectional views taken on lines XIA-XIA' and XIB-XIB' in Figure 8. As shown, the end portions of the axles 82' in a column of the rollers 40 are disposed within every third slot along the length of the column. In this arrangement, the centre-to-centre spacing $z$ between successive slots 77 along each unjoined edge of the side walls 78 may be made extremely small. As shown, the centre-to-centre spacing $z$ is substantially less than on-half the exterior diameter of the deformable tyre 74 of the roller 40. Practical considerations such as the occasional presence of rubbish or debris upon the rail section 90 during operation of a conveyor dictates that a small clearance be maintained between each successive pair of rollers in a column. In effect therefore, the multi-rail configuration disclosed provides a spacing between successive slots 77 which is substantially equal to the quotient of the sum of the exterior diameter of one of the rollers and the clearance between two successive rollers in the column, divided by the number of columns, 2 $n$ - 1.

In a typical configuration with two channel members, using rollers 40 having nominal 5.1 cm (2 inch) external diameters, mounted to provide approximately 0.79 mm (one thirty-second of an inch) clearance between successive rollers, the sum of the exterior diameter of one roller 40 and the clearance between two successive rollers will equal 5.1 cm (2 inches). This will allow for a 16.7 mm (0.657 inch) centre-to-centre spacing between successive slots. Alternatively, a 20.3 mm (0.8 inch) spacing between successive slots will accommodate 57.2 mm (2.25 inch) diameter rollers. It may be seen therefore, that this configuration accommodates a spacing between slots which nearly approaches one-third of the exterior diameter of the rollers. The practical advantages of this close spacing provided between successive slots 77 lie in both the ease with which a roller spacing pattern may be changed and in the ability of a conveyor with close spacing between successive rollers to accommodate, due to the staggered alignment of neighbouring columns, movement without tipping, of cargo borne in containers having load-bearing members of narrow width engaging the rollers.

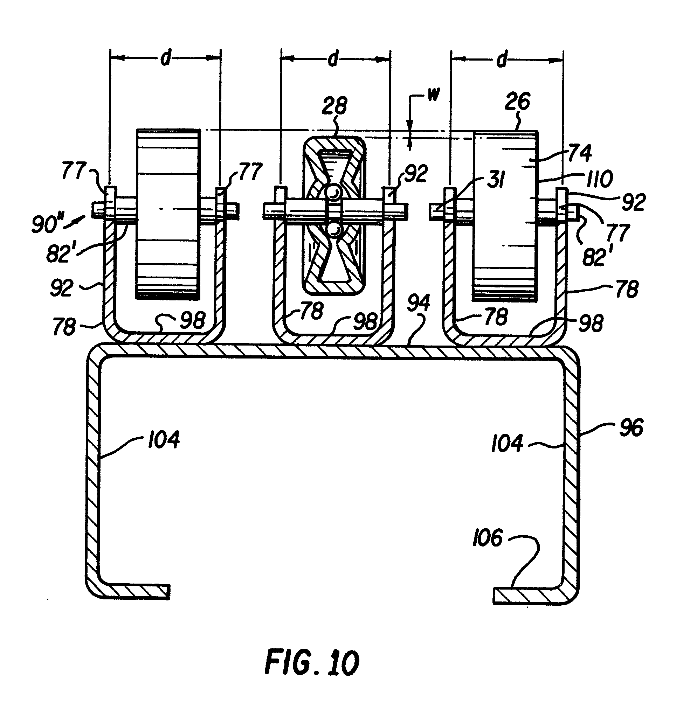

Figure 10 shows a section 90″ of a multi-track undriven gravity-type conveyor wherein a plurality of the channel members 92 of any desired lengths are attached, in a spaced-apart parallel relation to the outer surface of the web 94 of the base structure 96. Each of the channel members 92 has a pair of the opposite side wall 78 extending in parallel relation along the length of the section 90″ with the connecting sides 98 rigidly joining and maintaining each pair of the side walls 78 in fixed, spaced-apart relation. The connecting sides 98 of each of the channel members 92 are attached to the outer surface of the web 94. The feet 106 of the flange walls 104 are inwardly directed to provide a base occupying minimal lateral space.

The sections 90 in Figures 5, 6, 7 and 8, and 90″ in Figure 10 are formed with equidistant spacing between the slots 77 along the length of the side walls 78. In Figures 6, 7, 8 and 10, the end portions of the axles of 82″ along any column of the rollers 110 and 112, or 40 respectively, are disposed within the slots 77 in configurations suited to particular load-bearing requirements. For example, and is shown in Figures 7 and 8, the end portions of the axles 82' in the column of rollers 40, may be disposed within every third slot along the length of the column. The centre-to-centre spacing between successive open slots 77 along each side wall 78 may be made extremely small. In a typical embodiment, the centre-to-centre spacing between successive slots 77 is substantially less than one-half of the exterior diameter of the rollers 40. Such spacing allows the end portions of the axles 82' in a row of the rollers 40 to be disposed within every third slot 77 along the length of a column, whereby the disposition of the rollers 40 in the left, centre and right rows shown in Figures 7 and 8 provides a staggered alignment of axles 82' between neighbouring columns.

In an alternative to the embodiments shown in Figures 7 and 8, the spacing between successive slots along each channel member may be arranged to equal the sum of the exterior diameter of a roller 40 and a small clearance value. The staggered configuration of rollers can be achieved simply by incrementally shifting the channel members longitudinally relative to each other.

A plurality of the open slots 77 are formed along the unjoined edges of each side wall 78. The slots 77 are substantially identical and equidistantly spaced along the upper or unjoined edges of the side wall 78 and are aligned in parallel rows which are substantially perpendicular to the length of the multi-track rail section 90.

Thus the advantages of deformable tyres can be preserved while the difficulties attendant to the use of such tyres are reduces, thereby allowing their use in a wide variety of conveyor rails providing different arrangements of load-bearing rollers for movement and live storage of cargo. By minimizing indentation of the rollers into the cargo, the storage is facilitated as is re-starting of stationary cargo while preserving a degree of control over cargo acceleration and speed through use of hysteresis type elastomeric tyre materials. Through their closer lower spacing, other embodiments disclosed can provide increased load-carrying capacity while enabling gravity flow of cargo having narrow load-bearing surfaces. Examples of the types of cargo that may flow over a conveyor include pallets with very narrow slats and even pails and drums with bottom chines.

### Example 1

As an example of the effectiveness of the foregoing embodiments, a 1135 kg (2,500 pound) load mounted on a commercially available hardwood grocery pallet was placed on a gravity roller conveyor made with two rails, each using a series of rollers 10 having tyres 24 made of elastomeric materials exhibiting hardness of 80 Shore A at -23°C (-10°F). After the load had been allowed to rest and remain stationary for one-half of an hour at -23°C (-10°F), sufficient indentation of the rollers into the slats of the pallet occurred so that it became necessary to adjust the rails to provide a slope of 56 mm per metre (0.675 inches per foot) before the load would resume movement under force of gravity. With this slope, the load accelerated to a speed of 42.7 metres (140 feet) per minute and continued to accelerate within a space of 6.1 metres (20 feet). Such acceleration and concomitant high speed is, of course, unsafe in live storage conveyor applications.

### Example 2

When a gravity roller conveyor using the same number of rollers were separated by a column of rollers having the non-deformable bearing surfaces 70' with outer diameters sized to limit the deflection of the elastomeric tyres 74 of the remaining wheels to 1.9 mm (0.075 inches) was provided in a configuration with two multi-track rails as shown in Figure 5, indentation was minimized and the slope required to cause the pallet to resume movement under influence of gravity was reduced to 45 mm per metres (0.550 inches per foot). Additionally, the speed of the pallet after resumption of movement under the force of gravity was stabilized at 6.1 metres (20 feet) per minute.

### Claims

1. An undriven gravity roller conveyor, comprising:
a stationary rigid conveyor support (90);
a plurality of idler conveyor rollers (40) serially arranged in successive rows along a conveying direction extending longitudinally of the conveyor support (90);
bearing means (52, 54, 56) freely rotatably to mount each of the conveyor rollers (40) on the conveyor support (90) with parallel axes (46) of rotation, the axes (46) being perpendicular to the conveying direction to support loads on the conveyor rollers (40) and convey loads in the conveying direction;
a first plurality (110) of the rollers (40) within the length of the conveyor support (90) each having a rigid outer annular wheel surface (60), and an annular tyre (74) of an elastomeric material mounted on each rigid annular wheel surface (60) and concentrically disposed about a corresponding one of the axes (46) of the first plurality of rollers in each row;
each of the tyres (74) having an inner annular bearing surface of complementary shape to the rigid outer annular wheel surface (60);
the tyres having substantially equal radial thicknesses providing a first outer annular bearing surface (26) having a first radial dimension and a first circumferential surface area;
the elastomeric material of the tyres (74) having a deformation limit at which each of the tyres acquires excessive permanent set when radially depressed; and

the rollers (40) in each row providing support means having a rigid second outer annular bearing surface (70, 86) concentric with and rotatable about corresponding axes of rotation (46), the second outer annular bearing surface (70, 86) having a second and lesser radial dimension than the first radial dimension and a second circumferential surface area not less than one-half of the first circumferential surface area, to receive and directly engage concurrently with one or more of the tyres (74) disposed about the corresponding ones of the axes (46) a load being simultaneously supported and conveyed by one or more of the tyres (74) before the deformation limit of the elastomeric material is reached.

2. An undriven gravity roller conveyor according to claim 1, wherein each of the tyres exhibits the first radial dimension when in an unloaded condition and a different and lesser radial dimension than the first radial dimension when the deformation limit of the elastomeric material is reached, the second radial dimension being greater than the different radial dimension.

3. An undriven gravity roller conveyor according to claim 1, wherein the support means comprises a pair of axially spaced flanges (68) integrally forming part of and extending radially outwardly from axially opposed sides of each of the plurality of outer annular wheel surfaces on each of the first plurality of rollers.

4. An undriven gravity roller conveyor according to claim 1, wherein:
the support means comprises a pair of axially spaced flanges (68) integrally forming part of and extending radially outwardly from axially opposed sides of each of the plurality of outer annular wheel surfaces of each of the first plurality of rollers;
the tyres being freely mounted on each of the wheels for free axial and circumferential relative movement between the inner bearing surface and the outer annular wheel surface; and
the flanges (68) being of depths relative to the radial thickness of the tyres completely to receive the elastomeric material of the tyres (74) and of axial widths directly to engage the load being conveyed, before the deformation limit of the elastomeric material is reached under radial compression by the load being conveyed.

5. An undriven gravity roller conveyor according to claim 1, wherein the annular means comprises pairs of flanges integrally forming part of and extending radially outwardly from axially opposite sides of the annular wheel surface of each of the conveyor rollers and rims (116) adjoining and extending axially from the flanges directly to engage the load being conveyed before the deformation limit of the elastomeric material is reached.

6. An undriven gravity roller conveyor according to claim 1, wherein the support means comprises a second plurality (112) of rollers with one of the second plurality of the rollers being disposed in each of the rows in spaced apart and substantially coaxial relation to one of the first plurality (110) of rollers, the second plurality (112) of rollers providing the rigid outer annular bearing surface (70) having the second and lesser radial dimension and the second circumferential surface.

7. An undriven gravity roller conveyor according to claim 1, wherein:
the support means comprises a second plurality (112) of the rollers with each of the second plurality of rollers providing one of the rigid second outer annular bearing surfaces having the second and lesser radial dimension and the second circumferential surface; and
a plurality of the conveyor rollers are arranged in each of the rows with one of the first plurality (110) of rollers and one of the second plurality (112) of rollers being disposed in spaced apart and substantially coaxial relation in each of the rows.

8. An undriven gravity roller conveyor according to claim 1, wherein:
the bearing means include a plurality of axles (82), with each of the rollers mounted on a different one of the axles;
the stationary rigid conveyor support (90) includes a section providing a base (96) and a plurality of discrete elongate channel members (92) extending from the base (96) in a laterally spaced apart, parallel relation forming a plurality of columns, each of the channel members (92) having integral therewith a plurality of opposite side walls (78) extending longitudinally of the columns and a connecting side (98) rigidly joining and maintaining the opposite side walls (76) in a fixed spaced apart relation with the separation between the opposite side walls being equal to the separation between neighbouring channel members (92);
the plurality of opposite side walls (78) in each of the channel members have a plurality of slots (77) formed therein alignable with parallel rows having corresponding slots in at least the closest of the opposite side walls of a neighbouring one of the channel members, the parallel rows being substantially perpendicular to the length of the columns and the slots (77) being open, substantially identical and equidistantly spaced on both sides and along an unjoined edge of each of the opposite side walls in each of the channel members; and
the axles (82) are disposable within the slots (77), both between the plurality of opposite side walls (78) in each of the channel members (92) and between adjacent side walls of neighbouring pairs of the channel members (92) with the axles of rollers in any two neighbouring rows being disposable in different ones of the slots, whereby the separation between axles of roller in any two neighbouring ones of the columns may be less than one-half of the exterior diameter of the rollers.

9. An undriven gravity roller conveyor according to claim 8, wherein the plurality of rollers are disposed between adjacent pairs of the side walls, whereby $n$ discrete channel members can provide $2n - 1$ columns of the rollers.

10. An undriven gravity roller conveyor according to claim 9, wherein the spacing between successive slots (77) along the unjoined edge of each side wall is less than one-half of the exterior diameter of the rollers.

11. An undriven gravity roller conveyor according to claim 10, wherein the spacing between successive slots (77) along the unjoined edge of each side wall is substantially equal to the quotient of the sum of the exterior diameter of one of the rollers and the clearance between two successive rollers in a column divided by the number of the columns.

12. An undriven gravity roller conveyor, comprising:
a stationary rigid conveyor support (90);
a plurality of idler conveyor rollers (40) each having a pair of opposite axially spaced annular flanges (68) integrally forming part of and extending radially outwardly from opposite sides of a plurality of outer annular wheel surfaces (60), the rollers (40) being serially arranged in successive rows along a conveying direction extending longitudinally of the conveyor support (90);
the rollers (40) each having a rigid outer annular wheel surface, and an annular tyre (74) of an elastomeric material mounted on and concentrically disposed about the rigid annular wheel surface;
each of the tyres having an inner annular bearing surface (66) of complementary shape to the rigid outer annular wheel surface (60);
the tyres (74) having substantially equal radial thicknesses providing a first outer annular bearing surface (26) having a first radial dimension and a first circumferential surface area;
the elastomeric material of the tyres having a deformation limit at which the tyres acquire excessive permanent set when radially depressed; and
the axially spaced flanges (68) providing a rigid second outer annular bearing surface (70) concentric with the rigid annular wheel surface (60), the second outer annular bearing surface (70) having a second and lesser radial dimension than the first radial dimension and a second circumferential surface area not less than one-half of the first circumferential surface area, to receive and directly engage concurrently with one or more of the tyres disposed about corresponding axes a load being simultaneously supported and conveyed by one or more the tyres before the deformation limit of the elastomeric material is reached.

13. An undriven gravity roller conveyor according to claim 12, wherein:
the tyres (74) are freely mounted on each of the wheels for free axial and circumferential relative movement between the inner bearing surface (66) and the outer annular wheel surface (60).

14. An undriven gravity roller conveyor according to claim 12, wherein:

the flanges (68) extend radially outwardly from the outer annular wheel surface to provide depths relative to the radial thicknesses of the tyres completely to receive the elastomeric material of the tyres and of axial widths directly to engage the load being conveyed, before the deformation limit of the elastomeric material is reached under radial compression by the load being conveyed.

15. An undriven gravity roller conveyor according to claim 12, wherein the annular flanges integrally from part of and extend radially outwardly from axially opposed sides of the outer annular wheel surface of each of the conveyor rollers whereby the second outer annular bearing surface extends axially beyond the opposite sides of the outer annular wheel surfaces directly to engage the load being conveyed before the deformation limit of the elastomeric material is reached.

16. An undriven gravity roller conveyor according to claim 12, wherein:

the stationary rigid conveyor support (90) includes a section providing a base (96) and a plurality of discrete elongate channel members (92) extending from the base (96) in a laterally spaced apart, parallel relation forming a plurality of columns, each of the channel members (92) having integral therewith a plurality of opposite side walls (78) extending longitudinally of the columns and a connecting side (98) rigidly joining and maintaining the opposite side walls (78) in a fixed spaced apart relation with the separation between the opposite side walls (78) being equal to the separation between neighbouring channel members (92);

the plurality of opposite side walls (78) in each of the channel members has a plurality of slots (77) formed therein alignable with parallel rows having corresponding slots in at least the closest of the opposite side walls of a neighbouring one of the channel members, the parallel rows being substantially perpendicular to the length of the columns and, the slots being open, substantially identical and equidistantly spaced on both sides and along an unjoined edge of each of the opposite side walls in each of the channel members; and

the rollers (40) having axles (82) disposable within the slots (77), both between the plurality of opposite side walls (78) in each of the channel members (92) and between adjacent side walls (78) of neighbouring pairs of the channel members (92) with the axles (82) of rollers in any two neighbouring rows being disposable in different ones of the slots, whereby the separation between axles of rollers in any two neighbouring columns may be less than one-half of the exterior diameter of the rollers.

17. An undriven gravity roller conveyor according to claim 16, wherein the plurality of rollers are disposed between adjacent pairs of the side walls, whereby $n$ discrete channel members can provide $2n - 1$ columns of the rollers.

18. An undriven gravity roller conveyor according to claim 16, wherein the spacing between successive slots along the unjoined edge of each side wall is less than one-half of the exterior diameter of the rollers.

19. An undriven gravity roller conveyor according to claim 18, wherein the spacing between successive slots (77) along the unjoined edge of each side wall is substantially equal to the quotient of the sum of the exterior diameter of one of the rollers and the clearance between two successive rollers in a column divided by the number of the columns.

FIG. 1

FIG. 2

FIG. 3

FIG. 4

FIG. 5

FIG.5A

FIG. 6

FIG. 7

FIG. 8

EP 0 340 009 A1

FIG. 9A

FIG. 9B

EP 0 340 009 A1

FIG. 10

EP 0 340 009 A1

## DOCUMENTS CONSIDERED TO BE RELEVANT

EP 89304225.9

| Category | Citation of document with indication, where appropriate, of relevant passages | Relevant to claim | CLASSIFICATION OF THE APPLICATION (Int. Cl 4) |
|---|---|---|---|
| D,A | US - A - 4 006 810 (KORNYLAK) * Fig. 5 * | 1,12 | B 65 G 13/00 B 65 G 39/06 |
| D,A | US - A - 3 443 674 (KORNYLAK) * Fig. 5 * | 1,12 | |
| A | US - A - 3 621 960 (KORNYLAK) * Fig. 3 * | 1,12 | |

TECHNICAL FIELDS
SEARCHED (Int Cl 4)

B 65 G

The present search report has been drawn up for all claims

| Place of search | Date of completion of the search | Examiner |
|---|---|---|
| VIENNA | 07-07-1989 | BAUMGARTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82